# EUROPEAN PATENT APPLICATION

(11) **EP 4 538 128 A1**
(43) Date of publication of application: **16.04.2025**
(21) Application number: 24204271.1
(22) Date of filing: 02.10.2024
(51) Int. Cl.: B60T 13/38, B60T 13/68

(54) **AXLE BRAKE MODULE, ELECTRONIC BRAKE SYSTEM, BRAKE CONTROL METHOD AND ELECTRONIC DEVICE**

(30) Priority: 09.10.2023 CN 202311303530
(71) Applicant: ZF Commercial Vehicle Systems (Qingdao) Co. Ltd., Quingdao City 266510 (CN)
(72) Inventor: Qiu, Guoguang, Qingdao City, 266510 (CN)
(74) Representative: Bremer, Ulrich

(57) **Abstract**

The present invention relates to the technical field of braking, and provides an axle brake module, an electronic brake system, a brake control method and an electronic device. The axle brake module includes: a relay piston for separating a valve chamber into a control chamber and a brake chamber, the control chamber being connected to a control port, and the brake chamber being connected to an exhaust port; a first check valve arranged in a first exhaust passage of the brake chamber that leads to the exhaust port; a second check valve arranged in a second exhaust passage of the relay piston that communicates the control chamber with the brake chamber; and an exhaust control solenoid valve connected to the control port. In a brake release state, air in the brake chamber pushes the first check valve to open the first exhaust passage, and pushes the second check valve to open the second exhaust passage, and the exhaust control solenoid valve is opened, wherein an opening pressure of the second check valve is less than an opening pressure of the first check valve. In the present invention, a waterproof function of the axle brake module is achieved by means of the first check valve; and exhaust of residual pressure from the valve chamber in the brake release state is achieved by means of the second check valve and the exhaust control solenoid valve.

## Description

### Technical Field

The present invention relates to the technical field of braking, and in particular to an axle brake module, an electronic brake system, a brake control method and an electronic device.

### Background Art

An axle brake module is arranged on a chassis of a vehicle, and often encounters a problem of wading.

A conventional axle brake module does not have a waterproof function, and under an operating condition of wading, water would enter the interior of a valve chamber through an exhaust port of the axle brake module, resulting in failure of a product and even of the entire brake system.

In view of the problem of wading of the axle brake module, if only a check valve is provided at the exhaust port, it is less likely to cause air pressure inside the valve chamber to be exhausted when braking is released and the residual air pressure would affect the internal sealing of the valve chamber, and even cause the entire brake system to fail.

It should be noted that information disclosed in the above background art section is only used to enhance the understanding of the background of the present invention, and therefore may include information that does not constitute the prior art known to those of ordinary skill in the art.

### Summary of the Invention

In view of this, the present invention provides an axle brake module, an electronic brake system, a brake control method and an electronic device, be means of which a waterproof function can be effectively achieved, and exhaust of residual pressure from a valve chamber in a brake release state can be achieved.

According to an aspect of the present invention, provided is an axle brake module including a relay piston provided in a valve chamber, the relay piston separating the valve chamber into a control chamber and a brake chamber, the control chamber being connected to a control port, and the brake chamber being connected to an exhaust port. The axle brake module further includes: a first check valve arranged in a first exhaust passage of the brake chamber that leads to the exhaust port; a second check valve, the relay piston being provided with a second exhaust passage for communicating the control chamber with the brake chamber, and the second check valve being arranged in the second exhaust passage; and an exhaust control solenoid valve connected to the control port, wherein in a brake release state, air in the brake chamber pushes the first check valve to open the first exhaust passage, and pushes the second check valve to open the second exhaust passage, and the exhaust control solenoid valve is opened, wherein an opening pressure of the second check valve is less than an opening pressure of the first check valve.

In some embodiments, the axle brake module further includes: an air pressure sensor connected to the brake chamber, wherein in the brake release state, the exhaust control solenoid valve is opened until an air pressure value of the air pressure sensor decreases to a preset air pressure value.

In some embodiments, the exhaust control solenoid valve and the air pressure sensor are both connected to an electronic control unit.

In some embodiments, the exhaust control solenoid valve is a normally closed solenoid valve.

In some embodiments, the axle brake module further includes: an intake control solenoid valve connected to a control air supply and the control port, wherein in the brake release state, the intake control solenoid valve is closed; and in an electronically controlled braking state, the intake control solenoid valve is opened and the exhaust control solenoid valve is closed.

In some embodiments, the axle brake module further includes: an intake standby solenoid valve connected to a foot brake valve and the control port, wherein in the brake release state and the electronically controlled braking state, the intake standby solenoid valve is closed; and in a standby pressure braking state, the intake standby solenoid valve is opened, and the intake control solenoid valve and the exhaust control solenoid valve are closed.

In some embodiments, the intake control solenoid valve is a normally closed solenoid valve, and the intake standby solenoid valve is a normally open solenoid valve.

In some embodiments, the intake control solenoid valve and the intake standby solenoid valve are both connected to an electronic control unit.

According to another aspect of the present invention, provided is an electronic brake system provided with an axle brake module as described in any of the embodiments described above.

According to another aspect of the present invention, provided is a brake control method for controlling an axle brake module as described in any of the embodiments described above, the brake control method including: controlling, in response to a brake release signal, the exhaust control solenoid valve to be opened until air in the valve chamber is exhausted.

In some embodiments, the axle brake module further includes an air pressure sensor connected to the control port; and the in response to a brake release signal further includes: monitoring an air pressure value of the air pressure sensor, and controlling the exhaust control solenoid valve to be closed when the air pressure value is monitored to decrease to a preset air pressure value.

According to another aspect of the present invention, provided is an electronic device for implementing a brake control method as described in any of the embodiments described above.

Compared with the prior art, the present invention has at least the following beneficial effects.

In the axle brake module of the present invention, the first check valve is arranged in the first exhaust passage of the brake chamber that leads to the exhaust port, so that a waterproof function is achieved, preventing water from entering the interior of the valve chamber from the exhaust port, allowing the axle brake module to meet the requirements of underwater operation, improving the waterproof ability of a product, increasing the cleanliness of a brake pipeline of a vehicle, and prolonging the service life of brake parts. In the brake release state, the first check valve can open the first exhaust passage to exhaust air. The second check valve is arranged in the second exhaust passage for communicating the control chamber with the brake chamber, the exhaust control solenoid valve is connected to the control port, the opening pressure of the second check valve is less than the opening pressure of the first check valve, and the exhaust control solenoid valve remains opened in the brake release state, so that the residual pressure in the valve chamber can be effectively exhausted, making it simple and easy to implement, ensuring the stability and reliability of the product and the entire brake system, and improving the safety of the vehicle.

It should be understood that the above general description and the following detailed description are only exemplary and explanatory, and cannot limit the present invention.

### Brief Description of the Drawings

The accompanying drawings herein, which are incorporated into and constitute a part of the description, illustrate embodiments consistent with the present invention and, together with the description, are used to explain principles of the present invention. Obviously, the accompanying drawings described below show merely some of the embodiments of the present invention, and those of ordinary skill in the art would also have obtained other accompanying drawings according to these accompanying drawings without any creative effort.
FIGS. 1 to 3 are schematic diagrams of structural principles of an axle brake module according to an embodiment of the present invention, in which
   FIG. 1 shows an exhaust path in a brake release state, FIG. 2 shows an intake path in an electronically controlled braking state, and FIG. 3 shows an intake path in a standby pressure braking state; and

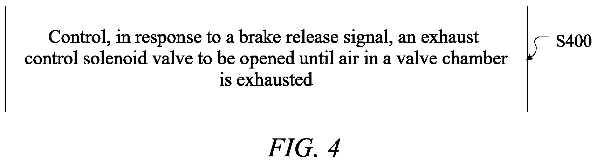

FIG. 4 is a schematic diagram showing steps of a brake control method according to an embodiment of the present invention.

### Detailed Description of Embodiments

Now exemplary implementations will be described more fully with reference to the accompanying drawings. However, the exemplary implementations can be implemented in many forms and should not be construed as being limited to the implementations set forth herein. On the contrary, these implementations are provided to make the present invention thorough and complete, and to fully convey the concept of the exemplary implementations to those skilled in the art.

The accompanying drawings are only schematic illustrations of the present invention, and are not necessarily drawn to scale. In the accompanying drawings, the same reference numerals denote the same or similar parts, and thus the repeated description thereof will be omitted. Some block diagrams shown in the accompanying drawings are functional entities, which do not necessarily correspond to physically or logically independent entities. These functional entities may be implemented in the form of software, in one or more hardware modules or integrated circuits, or in different networks and/or processor apparatuses and/or microcontroller apparatuses.

The terms "first", "second" and similar terms used in the specific description do not denote any order, quantity, or importance, but are merely used to distinguish different components. In the description of the present invention, orientations or positional relationships indicated by the terms such as "upper" and "lower" are based on orientations or positional relationships shown in the drawings, which is only for convenience of describing the present invention and simplifying the description, rather than indicating or implying that an apparatus or an element referred to must have a specific orientation or be constructed and operated in a specific orientation, and therefore cannot be construed as limiting the present invention.

It should be noted that the embodiments in the present invention and features of the various embodiments can be combined with each other without conflict.

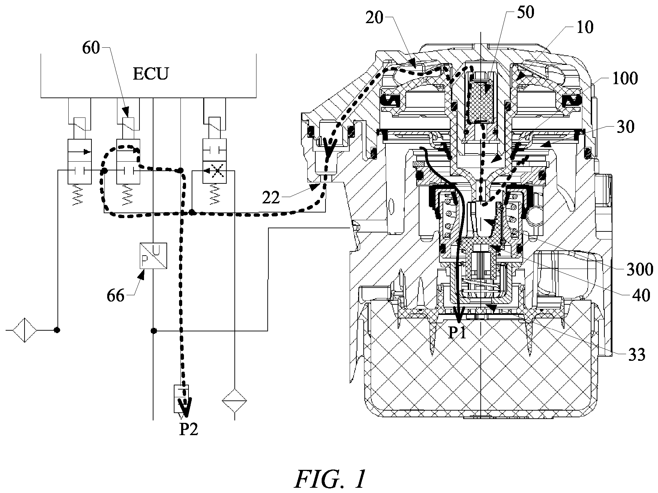

FIG. 1 shows a structural principle of an axle brake module, in which an exhaust path in a brake release state is indicated. Referring to FIG. 1, the axle brake module provided in an embodiment of the present invention includes:
a relay piston 10 provided in a valve chamber, the relay piston 10 separating the valve chamber into a control chamber 20 and a brake chamber 30, the control chamber 20 being connected to a control port 22, and the brake chamber 30 being connected to an exhaust port 33;
a first check valve 40 arranged in a first exhaust passage 300 of the brake chamber 30 that leads to the exhaust port 33;
a second check valve 50, the relay piston 10 being provided with a second exhaust passage 100 for communicating the control chamber 20 with the brake chamber 30, and the second check valve 50 being arranged in the second exhaust passage 100; and
an exhaust control solenoid valve 60 connected to the control port 22.

In the brake release state, air in the brake chamber 30 pushes the first check valve 40 to open the first exhaust passage 300, and pushes the second check valve 50 to open the second exhaust passage 100, and the exhaust control solenoid valve 60 is opened.

An opening pressure of the second check valve 50 is less than an opening pressure of the first check valve 40.

In the axle brake module of the present invention, the first check valve 40 is arranged in the first exhaust passage 300 of the brake chamber 30 that leads to the exhaust port 33, so that a waterproof function is achieved, preventing water from entering the interior of the valve chamber from the exhaust port 33, allowing the axle brake module to meet the requirements of underwater operation, improving the waterproof ability of a product, increasing the cleanliness of a brake pipeline of a vehicle, and prolonging the service life of brake parts.

Specifically, the first check valve 40 may be of a valve structure with a spring. Under the action of a spring force, the first check valve 40 is in sealing contact with an inner wall of the first exhaust passage 300. In this case, water, air, etc. from the exhaust port 33 cannot enter the valve chamber. When the spring is compressed downwardly, the first check valve 40 is out of sealing contact with the first exhaust passage 300, and thus opens the first exhaust passage 300, enabling air in the brake chamber 30 to be discharged through a first exhaust path P1 (the brake chamber 30 → the first exhaust passage 300 -> the exhaust port 33 → outside the valve).

In this way, by utilizing a unidirectional opening characteristic of the first check valve 40, the waterproof function of the axle brake module is realized, and in the brake release state, the first check valve 40 can open the first exhaust passage 300 to exhaust air.

Further, in order to ensure that the air in the brake chamber 30 is exhausted in the brake release state without being affected by the first check valve 40, the axle brake module of the present invention further provides the second check valve 50 in the second exhaust passage 100 of the relay piston 10 that communicates the control chamber 20 with the brake chamber 30, and provides the exhaust control solenoid valve 60 connected to the control port 22, and the opening pressure of the second check valve 50 is less than the opening pressure of the first check valve 40. In this way, as the air in the brake chamber 30 is gradually discharged, the first check valve 40 returns to be in sealing contact with the first exhaust passage 300, and the residual air in the brake chamber 30 can continue to push the second check valve 50, and is smoothly discharged through a second exhaust path P2 (the brake chamber 30 -> the second exhaust passage 100 → the control chamber 20 → the control port 22 → the exhaust control solenoid valve 60 → outside the valve).

Specifically, the second check valve 50 may adopt the structure of a sealing plug. In a braking state, air from the brake chamber 30 gently pushes the second check valve 50 to enable the second check valve 50 to be out of sealing contact with an inner wall of the second exhaust passage 100, so as to open a passage between the brake chamber 30 and the control chamber 20. When air from the control chamber 20 pushes the second check valve 50, the second check valve 50 remains in sealing contact with the inner wall of the second exhaust passage 100 so as to avoid air leakage in the braking state.

Therefore, in the brake release state, the residual pressure in the valve chamber can be effectively exhausted by only causing the exhaust control solenoid valve 60 to remain opened, making it simple and easy to implement, ensuring the stability and reliability of the product and the entire brake system, and improving the safety of the vehicle.

In some embodiments, the axle brake module further includes:
an air pressure sensor 66 connected to the brake chamber 30.

In the brake release state, the exhaust control solenoid valve 60 is opened until an air pressure value of the air pressure sensor 66 decreases to a preset air pressure value.

The air pressure value of the air pressure sensor 66 reflects the residual air pressure in the valve chamber. The air pressure value of the air pressure sensor 66 decreasing to the preset air pressure value (the preset air pressure value being, for example, 0.05 bar, but not limited thereto) indicates that air in the valve chamber has been substantially exhausted, the residual pressure in the valve chamber is negligible at this point, and the exhaust control solenoid valve 60 can thus be closed to end the exhaust process.

Conventionally, in the brake release state, only air in the control chamber 20 is discharged through the control port 22, and is exhausted within a short period of time. In the present invention, the open time of the exhaust control solenoid valve 60 is extended, and the open time of the exhaust control solenoid valve 60 is controlled based on the air pressure value monitored by the air pressure sensor 66, to ensure that the residual pressure in the valve chamber is exhausted.

In some embodiments, the exhaust control solenoid valve 60 and the air pressure sensor 66 are both connected to an electronic control unit (ECU). In this way, the electronic control unit (ECU) can control the opening of the exhaust control solenoid valve 60 according to a brake release signal (e.g., releasing a brake pedal), and control the open time of the exhaust control solenoid valve 60 according to the air pressure value monitored by the air pressure sensor 66, to accurately and conveniently exhaust the residual pressure from the valve chamber in the brake release state.

In some embodiments, the exhaust control solenoid valve 60 is a normally closed solenoid valve. That is, when not energized, the exhaust control solenoid valve 60 remains in a closed state; and when energized, a valve chamber of the exhaust control solenoid valve 60 is opened to allow air to pass through.

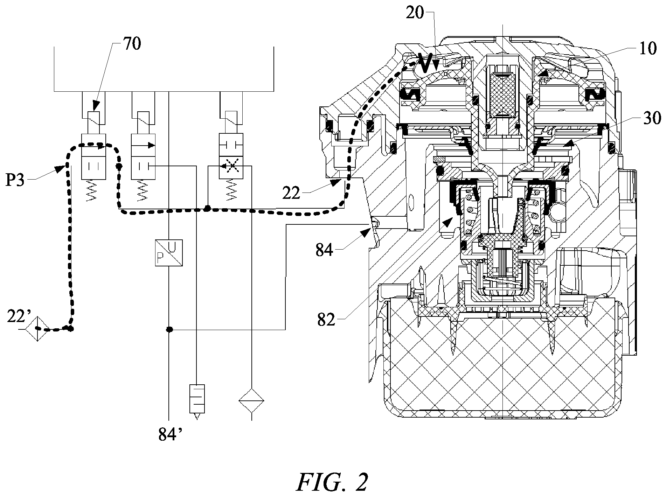

FIG. 2 shows a structural principle of the axle brake module, in which an intake path in an electronically controlled braking state is indicated. With reference to FIGS. 1 and 2, in some embodiments, the axle brake module further includes:
an intake control solenoid valve 70 connected to a control air supply 22' and the control port 22.

In the brake release state, the intake control solenoid valve 70 is closed; and
in the electronically controlled braking state, the intake control solenoid valve 70 is opened, and the exhaust control solenoid valve 60 is closed.

The intake control solenoid valve 70 may be connected to the control air supply 22', and in the electronically controlled braking state, the intake control solenoid valve 70 is opened to allow a control air of the control air supply 22' to enter the control chamber 20 through a first intake path P3 (the control air supply 22' → the intake control solenoid valve 70 → the control port 22) and act on the relay piston 10 to depress the relay piston 10 so as to open a passage between an air inlet 82 and an air outlet 84 of the axle brake module, causing a brake air from the air inlet 82 to flow through the brake chamber 30 to the air outlet 84, and further flow through the air outlet 84 to a brake air chamber 84' for performing braking.

The control air supply 22' is another air supply different from a foot brake valve, the control air supply 22' is connected to the control port 22 via the intake control solenoid valve 70, and a control air from the foot brake valve is replaced, such that according to different braking requirements, the pressure of the control air output by the control air supply 22' can be adjusted, and the pressure of the brake air output by the air outlet 84 is adjusted accordingly so that the braking of the vehicle is more adapted to actual operating conditions, thereby improving the safety and the effectiveness of the braking of the vehicle.

In addition, in a pipeline in which the air outlet 84 is connected to the brake air chamber 84', a sensor for detecting an air pressure may be provided, which is connected to the electronic control unit (ECU) to monitor a brake air pressure delivered to the brake air chamber 84'.

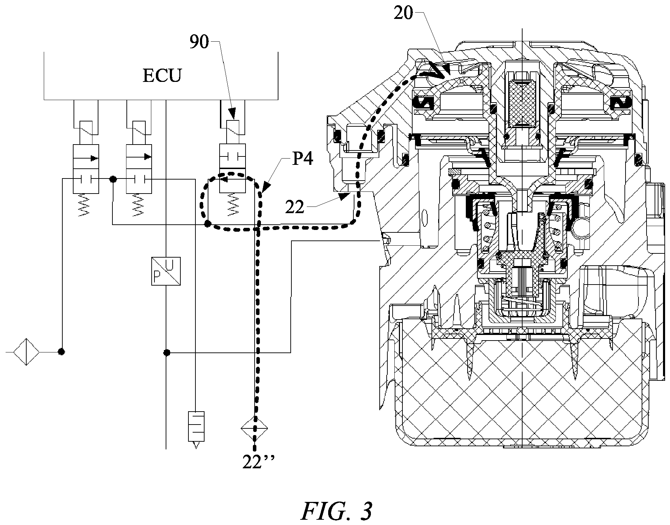

Further, FIG. 3 shows a structural principle of the axle brake module, in which an intake path in a standby pressure braking state is indicated. With reference to FIGS. 1 to 3, in some embodiments, the axle brake module further includes:
an intake standby solenoid valve 90 connected to a foot brake valve 22" and the control port 22.

In the brake release state and the electronically controlled braking state, the intake standby solenoid valve 90 is closed; and
in the standby pressure braking state, the intake standby solenoid valve 90 is opened, and the intake control solenoid valve 70 and the exhaust control solenoid valve 60 are closed.

In a braking state, if electronic control of an EBS fails and a solenoid valve cannot participate in the operation, the intake standby solenoid valve 90 is in communication with an air outlet of the foot brake valve 22" and the control port 22 to allow a brake control air pressure from the foot brake valve to pass through a second intake path P4 (the foot brake valve 22" → the intake standby solenoid valve 90 → the control port 22), to intake air into the control chamber 20.

In this way, the intake standby solenoid valve 90 enables the axle brake module of the present invention to have a conventional brake control logic to ensure normal braking. In addition, in the case of a normal operation of an electronically controlled braking of the EBS, the intake standby solenoid valve 90 can be closed in the braking state so as to adjust the brake control air pressure according to actual braking requirements of the vehicle.

In some embodiments, the intake control solenoid valve 70 is a normally closed solenoid valve, and the intake standby solenoid valve 90 is a normally open solenoid valve. In this way, in a conventional case, the intake control solenoid valve 70 and the intake standby solenoid valve 90 are not energized, and the axle brake module of the present invention has a conventional brake control logic based on the brake control air pressure of the foot brake valve. In the case of a need for the electronically controlled braking of the EBS, the intake standby solenoid valve 90 is energized, and the intake control solenoid valve 70 and the exhaust control solenoid valve 60 are appropriately controlled to be energized and de-energized, so as to effectively adjust the brake control air pressure.

In some embodiments, the intake control solenoid valve 70 and the intake standby solenoid valve 90 are both connected to the electronic control unit (ECU). In this way, the electronic control unit (ECU) can control the intake control solenoid valve 70 and the intake standby solenoid valve 90 according to a relevant brake signal, such as depressing the brake pedal.

In the various embodiments described above, it should be noted that in order to clearly illustrate air path directions and control logics of the axle brake module in above various operating conditions, such as the brake release state, the electronically controlled braking state and the standby pressure braking state, parts such as the exhaust control solenoid valve 60, the intake control solenoid valve 70 and the intake standby solenoid valve 90 are illustrated outside a valve body of the axle brake module in FIGS. 1 to 3. In an actual product, the parts such as the exhaust control solenoid valve 60, the intake control solenoid valve 70 and the intake standby solenoid valve 90 may all be integrated into the valve body of the axle brake module, and what is illustrated in the figures should not be construed as limiting the specific arrangement of various parts of the axle brake module of the present invention. As long as the various parts of the axle brake module meet the connection relationship and control logic described in any of the embodiments described above, the axle brake module can not only achieve the conventional functions of the existing axle brake module but also achieve waterproof protection and exhaust the residual pressure from the valve chamber in the brake release state.

Furthermore, the expression "exhaust" in the present invention means that the residual air pressure in the valve chamber is less than an appropriate threshold value, reference may be made to the description of the embodiments described above for details, and the description will not be repeated again.

An embodiment of the present invention further provides an electronic brake system (EBS) provided with an axle brake module as described in any of the embodiments described above.

The electronic brake system (EBS) is provided with the axle brake module described above, and thus can not only meet the conventional functions of the existing electronic brake system, but also achieve waterproof protection, meet the requirements of underwater operation, increase the cleanliness of the brake pipeline of the vehicle, prolong the service life of the brake parts, and exhaust the residual pressure from the valve chamber in the brake release state, so as to ensure the stability and reliability of the entire brake system and improve the safety of the vehicle.

An embodiment of the present invention further provides a brake control method for controlling an axle brake module as described in any of the embodiments described above. The features and principles of the axle brake module described in any of the embodiments described above are both applicable to the embodiments of the brake control method. In the following embodiments of the brake control method, the features and principles of the axle brake module that have been described will not be repeated again.

FIG. 4 shows main steps of the brake control method according to an embodiment. Referring to FIG. 4, and in conjunction with FIGS. 1 to 3, the brake control method provided in the embodiment of the present invention includes:
S400, controlling, in response to a brake release signal, the exhaust control solenoid valve 60 to be opened until air in the valve chamber is exhausted.

The brake release signal is sent, for example, when a driver releases the brake pedal. In response to the brake release signal, the exhaust control solenoid valve 60 is opened to assist in exhausting the valve chamber, and the exhaust control solenoid valve 60 remains opened until residual pressure in the valve chamber is exhausted.

In some embodiments, the axle brake module further includes the air pressure sensor 66 connected to the brake chamber 30. The in response to a brake release signal further includes: monitoring an air pressure value of the air pressure sensor 66, and controlling the exhaust control solenoid valve 60 to be closed when the air pressure value is monitored to decrease to a preset air pressure value.

The air pressure value of the air pressure sensor 66 reflects the residual air pressure in the valve chamber. The air pressure value of the air pressure sensor 66 decreasing to the preset air pressure value (e.g., 0.05 bar, but not limited thereto) indicates that air in the valve chamber has been substantially exhausted, the residual pressure in the valve chamber is negligible at this point, and the exhaust control solenoid valve 60 can thus be closed to end the exhaust process.

Further, the brake control method can also control the axle brake module to achieve the electronically controlled braking state, the standby pressure braking state, etc. described above, reference may be made to the description of the embodiments described above for details, and the description will not be repeated again.

An embodiment of the present invention further provides an electronic device for implementing a brake control method as described in any of the embodiments described above. The electronic device may be independently provided in a vehicle, or may be integrated in a controller such as an electronic control unit (ECU) of the vehicle, and the electronic device may be represented in the following forms.

The electronic device, in the form of a functional (program) module architecture, may include a module for implementing the various steps of the brake control method described above, for example includes a module for implementing step S400.

The electronic device, in the form of a general purpose computing device, may include a processing unit and a storage unit in which executable instructions are stored. When the executable instructions are executed by the processing unit, the brake control method as described in any of the embodiments described above is implemented.

The storage unit may include a program/utility having one or more program modules including but not limited to: an operating system, one or more applications, other program modules, and program data. The general purpose computing device further includes a bus for connecting the processing unit, the storage unit, and other platform components, and the bus may include a storage unit bus, a peripheral bus, a graphics acceleration port, a processing unit bus, and other local buses. The general purpose computing device may also communicate with one or more external devices, other computing devices of the vehicle, a network (e.g., a local area network (LAN), a wide area network (WAN), and/or a public network, such as the Internet), etc.

The electronic device, in the form of a storage medium, stores a program. When the program is executed, the brake control method as described in any of the embodiments described above is implemented.

The storage medium may be any tangible medium containing or storing a program, in particular any combination of one or more readable media. The readable medium may be a readable signal medium or a readable storage medium. The program may be used by or in combination with an instruction execution system, apparatus or means. The program may be completely executed on a user computing device, partially executed on a user device, executed as a separate software package, partially executed on a user computing device and partially executed on a remote computing device, or completely executed on a remote computing device or server. In the case of a remote computing device, the remote computing device may be connected to the user computing device via any kind of network, including a local area network (LAN) or a wide area network (WAN), or may be connected to an external computing device (for example, connected via the Internet with the aid of an Internet service provider).

The above is a further detailed description of the present invention with reference to the specific preferred implementations, and it cannot be considered that the specific implementation of the present invention is limited to these descriptions. For those of ordinary skill in the art of the present invention, several simple deductions or substitutions can be further made without departing from the concept of the present invention, and should be regarded as falling within the scope of protection of the present invention.

## Claims

1. An axle brake module, comprising a relay piston provided in a valve chamber, the relay piston separating the valve chamber into a control chamber and a brake chamber, the control chamber being connected to a control port, and the brake chamber being connected to an exhaust port;
**characterized in that** the axle brake module further comprises:
a first check valve arranged in a first exhaust passage of the brake chamber that leads to the exhaust port;
a second check valve, the relay piston being provided with a second exhaust passage for communicating the control chamber with the brake chamber, and the second check valve being arranged in the second exhaust passage; and
an exhaust control solenoid valve connected to the control port,
wherein in a brake release state, air in the brake chamber pushes the first check valve to open the first exhaust passage, and pushes the second check valve to open the second exhaust passage, and the exhaust control solenoid valve is opened,
wherein an opening pressure of the second check valve is less than an opening pressure of the first check valve.

2. The axle brake module of claim 1, **characterized by** further comprising:
an air pressure sensor connected to the brake chamber,
wherein in the brake release state, the exhaust control solenoid valve is opened until an air pressure value of the air pressure sensor decreases to a preset air pressure value.

3. The axle brake module of claim 2, **characterized in that** the exhaust control solenoid valve and the air pressure sensor are both connected to an electronic control unit.

4. The axle brake module of any one of claims 1-3, **characterized in that** the exhaust control solenoid valve is a normally closed solenoid valve.

5. The axle brake module of any one of claims 1-4, **characterized by** further comprising:
an intake control solenoid valve connected to a control air supply and the control port,
wherein in the brake release state, the intake control solenoid valve is closed; and
in an electronically controlled braking state, the intake control solenoid valve is opened and the exhaust control solenoid valve is closed.

6. The axle brake module of claim 5, **characterized by** further comprising:
an intake standby solenoid valve connected to a foot brake valve and the control port,
wherein in the brake release state and the electronically controlled braking state, the intake standby solenoid valve is closed; and
in a standby pressure braking state, the intake standby solenoid valve is opened, and the intake control solenoid valve and the exhaust control solenoid valve are closed.

7. The axle brake module of claim 6, **characterized in that** the intake control solenoid valve is a normally closed solenoid valve, and the intake standby solenoid valve is a normally open solenoid valve.

8. The axle brake module of claim 6 or 7, **characterized in that** the intake control solenoid valve and the intake standby solenoid valve are both connected to an electronic control unit.

9. An electronic brake system, **characterized in that** the electronic brake system is provided with an axle brake module of any one of claims 1-8.

10. A brake control method, **characterized in that** the brake control method is configured to control an axle brake module of any one of claims 1-8, and comprises :
controlling, in response to a brake release signal, the exhaust control solenoid valve to be opened until air in the valve chamber is exhausted.

11. The brake control method of claim 10, **characterized in that** the axle brake module further comprises an air pressure sensor connected to the brake chamber; and
the in response to a brake release signal further comprises:
monitoring an air pressure value of the air pressure sensor, and controlling the exhaust control solenoid valve to be closed when the air pressure value is monitored to decrease to a preset air pressure value.

12. An electronic device, **characterized in that** the electronic device is configured to implement a brake control method of claim 10 or 11.
